Europäisches Patentamt

European Patent Office

Office européen des brevets

(11) Publication number: **0 158 381**
**B1**

# EUROPEAN PATENT SPECIFICATION

(45) Date of publication of patent specification: **31.08.88**

(21) Application number: **85200333.4**

(22) Date of filing: **07.03.85**

(51) Int. Cl.⁴: **A 23 F 5/20**

(54) A process for removing chlorogenic acid compounds and caffeine from coffee, and roasted coffee obtainable by this process.

(30) Priority: **09.03.84 NL 8400759**

(43) Date of publication of application:
**16.10.85 Bulletin 85/42**

(45) Publication of the grant of the patent:
**31.08.88 Bulletin 88/35**

(84) Designated Contracting States:
**AT BE CH DE FR GB IT LI LU NL SE**

(56) References cited:
**EP-A-0 101 135**
**DE-C- 227 380**
**FR-A- 438 437**
**FR-A-2 363 995**
**US-A-1 629 512**

(73) Proprietor: **Douwe Egberts Koninklijke Tabaksfabriek- Koffiebranderijen-Theehandel N.V.**
**Keulsekade 143**
**NL-3532 AA Utrecht (NL)**

(72) Inventor: **van der Stegen, Gerrit Hubert Dirk**
**Lodewijkstraat 53**
**NL-3417 VD Montfoort (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 158 381

**Description**

This invention relates to a process for preparing mild decaffeinated coffee by removing chlorogenic acid compounds and caffeine from green coffee, which comprises subjecting the green coffee in the form of beans or in reduced form to extraction, using an organic solvent having a boiling point of not more than 150°C under atmospheric pressure and water, in such a way that after equilibrium has been reached or substantially reached between the coffee and the external phase of the extraction liquid, this external phase is homogeneous, subjecting the thus treated coffee to a steam treatment, drying and optionally roasting the same.

It is known that coffee contains different components which large groups of consumers feel are irritating to the gastrointestinal tract.

The irritation of the gastrointestinal tract caused with certain people by the consumption of coffee is ascribed to substances contained for the major part in the wax layer surrounding the green coffee beans. Some researchers believe that these substances are carboxyl-5-hydroxy tryptamides ($C_5HT$). Anyhow, these $C_5HT$ are used as indicators of the presence of the wax layer which would have to be removed in order to decrease the irritating effect of the coffee. Processes are known in which attempts are made to remove this wax layer by treating dry green coffee with an organic solvent followed by a steam treatment of the thus treated coffee to remove solvent residues.

In the decaffeination of coffee by extraction with an organic solvent the wax layer will in general also dissolve so that decaffeinated coffee shows not only a decreased caffeine content, but also a decreased $C_5HT$ content. Yet it appears that such coffee causes undesirable effects with certain people. There are strong indications that chlorogenic acid compounds, particularly the caffeic acid moiety and/or ferulic acid moiety of chlorogenic acid compounds occurring in coffee play an important role for that matter. Caffeine is contained in coffee, spread throughout the whole bean. Many processes for decaffeinating coffee are known. In general, caffeine is made diffusible by allowing coffee to absorb water, and caffeine is removed by extraction with an organic solvent, often dichloromethane, in which the caffeine is properly soluble, but in which other coffee ingredients are soluble as poorly as possible in order to minimize decrease in weight and quality of the coffee. After extraction the coffee is treated with steam to remove residual solvent. The organic solvent may be water-immiscible or limitedly watermiscible. Applicants' laid-open European application 101,135 discloses a process for decaffeinating dry coffee with a mixture of water and an organic solvent of the last-mentioned type. As regards the decaffeination, reference is made to US patent 4,256,774 for a further discussion of the prior art.

It has hitherto not been possible to remove caffeine and chlorogenic acid compounds from green coffee simultaneously and in a sufficient degree. This is caused by the fact that caffeine is substantially nonpolar, and the chlorogenic acid compounds are highly polar so that these substances behave very differently with respect to solvents. Caffeine is properly solvable in many organic solvents, which is much less the case with the chlorogenic acid compounds. The use of much water to dissolve the chlorogenic acid compounds in a sufficient degree would cause an unacceptable loss of other, properly water-soluble coffee ingredients, e.g., all types of sugars.

DE—C 227,380 discloses a process for decaffeinating coffee beans by first treating the beans with volatile acid, optionally in aqueous solution, followed by extraction with an organic solvent.

FR—A 438,437 is concerned with a process for decaffeinating coffee beans by treating them with a diluted aqueous solution or an organic or mineral acid. Subsequently the caffeine is removed from the extract and the remainder thereof is returned to the beans.

US—A 1,629,512 discloses extracting caffeine from coffee under pressure, in the presence of a solvent for caffeine.

The object of this invention is to prepare "mild" coffee by simultaneous removal of caffeine, the wax layer and chlorogenic acid compounds, particularly the caffeic acid moiety and/or ferulic acid moiety thereof, such as monoferoylquinic acids and dicaffeoylquinic acids, from green coffee.

Surprisingly, it has been found that this object may be achieved by additional use of an acid in the extraction liquid for the extraction of the green coffee.

Consequently, this invention relates to a process for removing chlorogenic acid compounds and caffeine from green coffee, which comprises subjecting the green coffee in the form of beans or in reduced form to extraction, using an organic solvent having a boiling point under atmospheric pressure of not more than 150°C and water, in such a way that after equilibrium has been reached or substantially reached between the coffee and the external phase of the extraction liquid this external phase is homogeneous, subjecting the thus treated coffee to a steam treatment, drying and optionally roasting the same, which process is characterized in that extraction is carried out by co-using an acid in an amount sufficient to remove chlorogenic compounds from the coffee.

Preferably, such amounts of organic solvent, water and acid are used that the external phase of the extraction liquid being in equilibrium with the coffee contains 65—99.4% by weight of solvent, 0.5—15% by weight of water, and 0.1—25% by weight of acid.

Furthermore, it has appeared that by using the process according to this invention monoferoylquinic acids and dicaffeoylquinic acids are removed, whereas also the caffeine removal efficiency increases.

In addition, the selective removal of the dicaffeoylquinic acid compounds may effect an improvement

2

in quality of the coffee in view of the negative influence on the quality suggested for these compounds (O. Ohiolpehai, G. Brumen and M. N. Clifford 10th ASIC Colloquium, Salvador de Bahia 1982, p. 177).

As the various substances used in the extraction are absorbed by the green coffee in a different degree, it will be necessary to attune the employed amounts of organic solvent, water and acid thereto.

The composition of the extraction liquid and the extraction conditions, particularly the extraction temperature, should be selected in such a way that after equilibrium has been reached between the coffee and the external phase of the extraction liquid this external phase is homogeneous. By the external phase of the extraction liquid is meant the portion of the extraction liquid that is outside the green coffee during extraction. The amounts of organic solvent, water and acid in the extraction liquid should be selected in relation to the mutual miscibility of these liquids in such a way that at a practically available extraction temperature the external phase of the extraction liquid is homogeneous. For a selected organic solvent suitable mixing ratios with water and acid and a suitable extraction temperature can be determined by means of simple tests.

In the extraction liquids used according to the invention a phase separation may occur owing to the separation of an aqueous phase from the organic solvent. This is particularly the case if the solvent is highly nonpolar, or if a lot of water is used.

Phase separation results in that the selectivity of the extraction substantially deteriorates. Consequently the ratios of the different substances should be selected in such a way that the external phase of the extraction liquid is homogeneous. Of course, it is possible that solid particles are present in this external phase.

The concept "equilibrium", as used in this context, is concerned with the absorption of the extraction liquid by the green coffee. Equilibrium has been reached as soon as the content of organic solvent, water and acid in the coffee, on the one hand, and the mutual ratio of these substances in the external phase, on the other hand, both remain constant or substantially constant.

In the process according to this invention green coffee, which has been moistened previously to such an extent that the caffeine is diffusible, or dry green coffee may be started from. In the latter case so much additional water should be used in the extraction as would have been required for previously moistening the coffee. By "moistening" is meant here a treatment with water or steam such that the coffee contains in total 20—50% by weight of water.

On the other hand, it is also possible to start from coffee moistened to such an extent that it is not necessary to supply any water to the extraction. The water contained in the coffee then diffuses, when equilibrium has been reached, partly from the coffee to the external liquid phase.

In principle, any organic solvent in which caffeine is sufficiently soluble can be used in the extraction liquid. Examples of such solvents are dichloromethane, trichloroethylene and ethyl acetate.

Preferably, however, as disclosed in applicants' British patent 1,527,667, an organic solvent is selected which naturally occurs in roasted coffee and is preferably contained therein in such an amount that a not unduly long steam time is sufficient to remove the solvent residues from the coffee to such an extent that after roasting a normal content of the solvent is found in the coffee. Examples of such solvents are methyl ethyl ketone, acetone and methyl acetate.

Besides, any acid can be used in the extraction liquid in principle. However, the effect has proved to be better, in proportion as the acid is better dissociable. Consequently, use is preferably made of an acid having a pKa value of less than 5.

If it is desired that the roasted coffee contains no residues of the acid, use is preferably made of an acid which volatilizes or is decomposed to volatile products in the process of steaming, drying and/or roasting the coffee. It is also possible to use an acid, the acid residue of which naturally occurs in roasted coffee.

Examples of acids satisfying one of these conditions or both conditions are formic acid, acetic acid, citric acid, malic acid, hydrochloric acid, sulfuric acid, and phosphoric acid.

The amount of acid in the external phase of the extraction liquid is co-determined by the acidity of the acid. Particularly when stronger acids are used, smaller amounts will suffice.

It should be noted that French patent publication 2363995 discloses a process for decaffeinating green coffee with benzyl alcohol. In order to reduce the viscosity thereof, there may be used a second organic compound selected from a long enumeration also mentioning acetic acid.

Benzyl alcohol has a boiling point of 205°C and is therefore not suitable for the present process. Owing to the high boiling point it is hard to remove this benzyl alcohol from the treated coffee.

Preferably, according to the present invention, use is made of organic solvents having a boiling point which is not higher than the boiling point of water. The lower limit for the boiling point is not critical, but compounds having a boiling point of less than 0°C are preferably not used for practical reasons (necessity of very low extraction temperature or pressure apparatuses).

The process according to this invention can be carried out batchwise or continuously, e.g., in an extraction battery or in a conveyor-belt extractor.

By using the process according to this invention caffeine, the wax layer and chlorogenic acid compounds are removed from green coffee simultaneously. The principal chlorogenic acid compounds occurring in coffee are monocaffeoyl-, monoferoyl-, and dicaffeoylquinic acid compounds. The chlorogenic acid compounds which are considered the most relevant in this respect are the dicaffeoyl- and monoferoylquinic acid compounds. This is explained by the fact that owing to the presence of two caffeic acid groups per molecule the dicaffeoylquinic acid compounds contribute to the formation of phenolic decomposition products during roasting of the coffee more considerably than the other chlorogenic acid subgroups, and that ferulic acid acts on the bile more strongly than the other chlorogenic acid subgroups. It is exactly the monoferoyl- and dicaffeoylquinic acid compounds that are preferentially removed from the green coffee by using the process according to this invention.

According to this invention the extracted coffee is treated with steam and is then dried. This drying step may be immediately followed by the roasting step. It is also possible, however, to roast the dried coffee only at a later stage, if desired in another place. This invention therefore relates not only to the preparation of roasted coffee but also to the preparation of unroasted coffee.

The present invention further relates to roasted coffee obtainable by using the process according to this invention.

It has further been found that as a result of the addition of acid not only the above-mentioned chlorogenic acids are co-extracted, but also the extraction of caffeine is improved by a more favourable distribution coefficient, as shown in the following table.

Distribution coefficient

| Organic solvent | Methyl ethyl ketone | Ethyl acetate | Dichloro-methane |
|---|---|---|---|
| Acetic acid (g/l external phase extractant | (at 70°C) | (at 70°C) | (at 37°C) |
| 0 (<0.5) | 1.5 (65)* | 2.4 (39)* | 1.3 (2)* |
| 8.5 | 1.4 (69) | | |
| 12.0 | | 2.1 (44) | |
| 16.0 | | | 1.1 (4) |
| 21.0 | 1.3 (72) | | |
| 31.0 | | 1.9 (50) | |
| 33.5 | 1.2 (75) | | |
| 47.0 | | | 1.0 (6) |
| 51.7 | | 1.9 (51) | |
| 84.4 | | | 1.0 (8) |
| 104.6 | | | 0.9 (18) |
| 161.3 | | | 0.9 (22) |

*Indicated in parentheses is the water concentration in the external phase of the extractant (in g/l). The distribution coefficient is the equilibrium concentration of caffeine in the coffee divided by that in the extract expressed as g caffeine/kg dry coffee divided by g caffeine/l extract.

These distribution coefficients were determined by allowing aliquots of green coffee (optionally moistened) organic solvent, acid and, if required, water to come to equilibrium with each other overnight at the indicated temperature. If after equilibrium had been reached the external phase of the extractant was a homogeneous (i.e. single) liquid phase, then the equilibrium concentrations of water, acid and the relevant dissolved substances were measured and the distribution coefficient was calculated therefrom in the manner as indicated above.

The immediate result of this more favourable distribution coefficient is that with the same amount of extractant a higher degree of caffeine extraction is reached, in other words, that less extractant is required for obtaining complete decaffeination of the coffee. This effect will be illustrated by the following examples.

Example I

In an extraction battery with six extraction sections portions of 1 kg Robusta coffee having a moisture

4

content of approximately 10% by weight were extracted, for 8 hours, with an extraction liquid consisting of a mixture of methyl ethyl ketone (MEK), water ($H_2O$) and acetic acid (HAc), which contains 72 g $H_2O$ and 21 g HAc per liter. Portions of 1 kg coffee were supplied to the first section of the battery, as well as, spread over the residence time of one portion in the first section, 0.16 kg of a mixture of HAc and $H_2O$ in a weight ratio of 1:15. From the first section, 2.1 l extract was withdrawn per portion of coffee, said extract containing, per liter, 72 g $H_2O$ and 21 g HAc, as well as the extracted caffeine and chlorogenic acid compounds. Portions of 2.3 kg fresh extraction liquid was supplied to the last section of the battery. The extracted coffee was obtained from the last section.

The extracted coffee was steamed to remove solvent, then dried to its original moisture content, and roasted in the conventional manner.

Of the original green coffee and of the dried (not yet roasted) extracted coffee, the contents of caffeine, chlorogenic acid compounds and $C_5HT$ were determined. Of the roasted extracted coffee the HAc content was determined.

For comparative purposes the test described was repeated, but without HAc in the extraction liquid. The same analyses were carried out. The results are listed in the following table, in which the contents are indicated in g/kg dry matter.

| | | After extraction with | |
| | Before extraction | MEK+$H_2O$ | MEK+$H_2O$+HAc |
|---|---|---|---|
| Caffeine | 22 | 0.9 | 0.5 |
| Chlorogenic acid compounds —monocaffeoylquinic acids | 75 | 72 | 64 |
| —monoferoylquinic acids | 16 | 13.5 | 6.9 |
| —dicaffeoylquinic acids | 17 | 12 | 7.3 |
| Carboxy-5-hydroxy-tryptamides | 0.8 | <0.1 | <0.1 |

The roasted products from both tests contained substantially equal amounts of HAc.

These results show that the presence of HAc in the extraction liquid leads to a preferential increase in the extraction of monoferoylquinic acids (from 16% removal to 57% removal) and of dicaffeoylquinic acids (from 29% removal to 57% removal).

The quality of the roasted product of the thus extracted green coffee was judged by professional testers as upgraded in comparison with the unextracted roasted product.

Example II

In an extraction battery with 6 extraction sections Robusta coffee was extracted countercurrently with an extraction liquid consisting of ethyl acetate, water (50 g/l) and acetic acid (31 g/l) for 9 hours at 70°C. Portions of 1.35 kg moistened coffee were supplied to the first section of the battery. This moistened coffee was moistened with steam and/or water in an otherwise known manner to a moisture content of 33%.

From the first section 3.0 l extract per portion of coffee was withdrawn, said extract containing per liter 50 g water and 31 g acetic acid, as well as the extracted caffeine and chlorogenic acid compounds. 3.6 l fresh extraction liquid per portion of coffee were supplied to the last section of the battery. The portions of extracted coffee were also obtained from this section.

The extracted coffee was steamed to remove solvent residues and then dried to its original moisture content (±10%). A sample of the thus obtained extracted coffee was analyzed, and the remaining part was roasted in the conventional manner.

For comparative purposes the test described was repeated under equal conditions and in equal amounts, but now without acetic acid in the extraction liquid.

The analysis results of the crude coffee and of both extracted green coffees are listed in the following table (indicated in g/kg dry matter).

|  | Before extraction | After extraction with | |
|---|---|---|---|
|  |  | EtAc+$H_2O$ | EtAc+$H_2O$+HAc |
| Caffeine | 22 | 1.2 | 0.5 |
| Chlorogenic acid compounds: | | | |
| —monocaffeoylquinic acids | 75 | 74.2 | 69.6 |
| —monoferoylquinic acids | 16 | 15.0 | 10.4 |
| —dicaffeoylquinic acids | 17 | 15.6 | 11.1 |
| Carboxy-5-hydroxy-tryptamides | 0.8 | <0.1 | <0.1 |

By addition of acetic acid (31 g/l) to the extractant, under otherwise equal extraction conditions, the extraction of monoferoylquinic acids and decaffeoylquinic acids increases from respectively 6 and 8% to 35% of the amounts originally contained in the green coffee.

After roasting samples of both the unextracted and the two extracted coffees contain an acetic acid content normal to roasted Robusta coffee (~4 g/kg).

When testing brews of these roasted coffees, experts judged the quality of the coffee extracted with EtAc+$H_2O$+HAc as upgraded.

Example III

The process of Example II was repeated, using dichloromethane as the organic solvent. When 161 g/l acetic acid was used in the external phase, the distribution coefficient of the monoferoylquinic acids was 35, while in the absence of acetic acid no extraction of these compounds took place.

Example IV

Example III was repeated using instead of acetic acid a series of other acids, namely, formic acid, citric acid, malic acid, hydrochloric acid, sulfuric acid and phosphoric acid.

Comparable results are obtained.

A repetition of Examples I and II with these acids gives comparable results.

**Claims**

1. A process for removing chlorogenic acid compounds and caffeine from green coffee, which comprises subjecting the green coffee in the form of beans or in reduced form to extraction, using an organic solvent having a boiling point under atmospheric pressure of not more than 150°C and water, in such a way that after equilibrium has been reached or substantially reached between the coffee and the external phase of the extraction liquid this external phase is homogeneous, subjecting the thus treated coffee to a steam treatment, drying and optionally roasting the same, characterized in that extraction is carried out by co-using an acid in an amount sufficient to remove chlorogenic compounds from the coffee.

2. A process according to claim 1, characterized by using such amounts of organic solvent, water and acid that said homogeneous external phase contains 65—99.4% of solvent, 0.5—15% by weight of water, and 0.1—25% by weight of acid.

3. A process according to claim 1 or 2, characterized by using an acid having a pKa value of less than 5.

4. A process according to claims 1—3, characterized by using an acid which volatilizes or is decomposed to volatile products when the extracted coffee is steamed, dried and/or roasted.

5. A process according to claims 1—3, characterised by using an acid having an acid residue naturally occurring in roasted coffee.

6. A process according to claims 3—5, characterized by using formic acid, acetic acid, citric acid, malic acid, hydrochloric acid, sulfuric acid, phosphoric acid or a mixture of two or more thereof.

7. A process according to claims 1—6, characterized by using an organic solvent naturally occurring in roasted coffee or a mixture of such solvents.

8. A process according to claims 1—7, characterized by using as the organic solvent methyl ethyl ketone, acetone, methyl acetate, ethyl acetate, dichloromethane trichloroethylene or a mixture of two or more thereof.

9. A process according to claim 1—8, characterized in that the dried green coffee is roasted.

**Patentansprüche**

1. Verfahren zum Entfernen von Chlorogensäure-Verbindungen und Coffein aus grünem Kaffee, wobei man den grünen Kaffee in der Form von Bohnen oder in zerkleinerter Form extrahiert, unter Verwendung eines organischen Lösungsmittels mit einem Siedepunkt unter atmosphärischem Druck von nicht mehr als 150°C und Wasser, derart, daß nach Erreichen oder im wesentlichen Erreichen des Gleichgewichts zwischen dem Kaffee und der äußeren Phase der Extraktionsflüssigkeit, diese äußere Phase homogen ist, Dampfbehandeln des so behandelten Kaffees, Trocknen und gegebenenfalls Rösten des Kaffees, dadurch gekennzeichnet, daß die Extraktion unter Mitverwendung einer Säure in ausreichender Menge zur Entfernung von Chlorogen-Verbindungen aus dem Kaffee, durchgeführt wird.

2. Verfahren nach Anspruch 1, dadurch gekennzeichnet, daß derartige Mengen an organischem Lösungsmittel, Wasser und Säure verwendet werden, das die homogene äußere Phase 65—99,4% Lösungsmittel, 0,5—15 Gew.-% Wasser und 0,1—25 Gew.-% Säure enthält.

3. Verfahren nach Anspruch 1 oder 2, gekennzeichnet durch die Verwendung einer Säure mit einem pKa-Wert von weniger als 5.

4. Verfahren nach den Ansprüchen 1—3, gekennzeichnet durch die Verwendung einer Säure, die sich verflüchtigt oder zu flüchtigen Produkten zersetzt wird, wenn der extrahierte Kaffee einer Dampfbehandlung unterzogen, getrocknet und/oder geröstet wird.

5. Verfahren nach den Ansprüchen 1—3, gekennzeichnet durch die Verwendung einer Säure mit einem Säurerest, der in geröstetem Kaffee natürlich vorkommt.

6. Verfahren nach den Ansprüchen 3—5, gekennzeichnet durch die Verwendung vom Ameisensäure, Essigsäure, Zitronensäure, Apfelsäure, Chlorwasserstoffsäure, Schwefelsäure, Phosphorsäure oder einem Gemisch von zwei oder mehreren davon.

7. Verfahren nach den Ansprüchen 1—6, gekennzeichnet durch die Verwendung eines organischen Lösungsmittels, das natürlich in geröstetem Kaffee vorkommt, oder eines Gemischs derartiger Lösungsmittel.

8. Verfahren nach den Ansprüchen 1—7, gekennzeichnet durch die Verwendung von Methyl-ethylketon, Aceton, Methylacetat, Ethylacetat, Methylenchlorid, Trichlorethylen oder einem Gemisch von zwei oder mehreren davon, als organisches Lösungsmittel.

9. Verfahren nach den Ansprüchen 1—8, dadurch gekennzeichnet, daß der getrocknete grüne Kaffee geröstet wird.

**Revendications**

1. Procédé pour éliminer les composés chlorogéniques et la caféine de café vert, procédé dans lequel on soumet le café vert en grains ou réduit à l'état de poudre à une extraction avec un solvant organique dont le point d'ébullition ne dépasse pas 150°C à la pression atmosphérique et de l'eau, de manière qu'après que l'équilibre entre le café et la phase externe du liquide d'extraction a été atteint ou pratiquement atteint, cette phase externe soit homogène, puis on soumet le café qui a été ainsi traité à un traitement avec de la vapeur d'eau, ensuite on le sèche et le cas échéant on le torréfie, procédé caractérisé en ce que l'on effectue l'extraction avec le solvant auquel on a ajouté un acide dans la proportion nécessaire pour éliminer les composés chlorogéniques du café.

2. Un procédé selon la revendication 1 caractérisé en ce que l'on utilise des proportions du solvant organique, de l'eau et de l'acide qui donnent une phase externe homogène contenant de 65 à 99,4% en poids de solvant, de 0,5 à 15% d'eau et de 0,1 à 25% de l'acide.

3. Un procédé selon la revendication 1 ou 2 caractérisé en ce que l'on utilise un acide ayant un pKa inférieur à 5.

4. Un procédé selon les revendications 1 à 3 caractérisé en ce que l'on utilise un acide qui se volatilise ou se décompose en produits volatils quand on traite à la vapeur, on sèche et/ou on torréfie le café qui a été soumis à l'extraction.

5. Un procédé selon les revendications 1 à 3, caractérisé en ce que l'on utilise un acide que contient naturellement à l'état de restes le café torréfié.

6. Un procédé selon les revendications 3 à 5, caractérisé en ce que l'on utilise de l'acide formique, acétique, citrique, malique, chlorhydrique, sulfurique ou phosphorique, ou un mélange de deux ou plus de ces acides.

7. Un procédé selon les revendications 1 à 6, caractérisé en ce que l'on utilise un solvant qui se trouve à l'état naturel dans le café torréfié, ou un mélange de plusieurs de ces solvants.

8. Un procédé selon les revendications 1 à 7, caractérisé en ce que l'on utilise comme solvant de la méthyl-éthyl-cétone, de l'acétone, de l'acétate de méthyle ou d'éthyle, du dichlorométhane, du trichloroéthylène ou un mélange de deux ou plus de ces solvants.

9. Un procédé selon l'une des revendications 1 à 8, caractérisé en ce que l'on torréfie le café vert séché.